# EUROPÄISCHE PATENTSCHRIFT

(11) **EP 0 877 568 B1**
(45) Veröffentlichungstag und Bekanntmachung des Hinweises auf die Patenterteilung: **20.08.2003**
(21) Anmeldenummer: 96937329.9
(22) Anmeldetag: 02.11.1996
(51) Int. Cl.: A45D 20/12, B29C 65/46

(54) **VERFAHREN UND VORRICHTUNG ZUR BEFESTIGUNG EINES GITTERS IN EINEM GEHÄUSE EINES HAARTROCKNERS**
METHOD AND DEVICE FOR SECURING A GRID IN A HOUSING OF A HAIR DRIER
PROCEDE ET DISPOSITIF POUR FIXER UNE GRILLE DANS UN BOITIER DE SECHE-CHEVEUX

(30) Priorität: 31.01.1996 DE 19603336
(43) Veröffentlichungstag der Anmeldung: 18.11.1998
(73) Patentinhaber: Braun GmbH, Kronberg (DE)
(72) Erfinder: KASTL, Hans, D-61462 Königstein (DE); MAJTHAN, Rudolf, D-65760 Eschborn (DE)
(74) Vertreter: Vorbeck, Wolfgang, Dr.
(86) Internationale Anmeldenummer: EP9604759
(87) Internationale Veröffentlichungsnummer: WO97027779

(56) Entgegenhaltungen:
- EP-A- 0 463 315
- CH-A- 337 426
- DE-A- 2 930 381
- FR-A- 2 483 308
- US-A- 4 198 557
- US-A- 4 819 722

## Beschreibung

Die Erfindung betrifft ein Verfahren zur Befestigung eines Gitters in einem Gehäuse insbesondere eines Haartrockners, wobei das Gitter aus metallischem Material und das Gehäuse aus kunststoffhaltigem Material besteht, sowie eine Vorrichtung zur Durchführung des Verfahrens und einen Haartrockner mit einem in einem Gehäuse gehaltenen Gitter.

Bei vielen derzeit gewerblich angebotenen Haartrocknern ist es üblich, in der Öffnung für die erwärmte Luft ein Gitter anzuordnen, das am Gehäuse des Haartrockners befestigt ist. Das Gitter ist meist aus Metall hergestellt und das Gehäuse aus Kunststoff. Zur Befestigung des Gitters in der Öffnung des Gehäuses wird häufig ein Ultraschall-Bördelverfahren angewandt, bei dem das Gitter mit dem Gehäuse verschweißt wird. Dieses Verfahren hat sich in der Praxis insbesondere im Hinblick auf die zu erreichende Stabilität bewährt, weist jedoch einige Nachteile auf. So nutzt sich beispielsweise das Werkzeug für die Ultraschall-Erzeugung mit der Zeit ab und muß regelmäßig erneuert werden, was mit erhöhten Kosten verbunden ist Des weiteren ist es gelegentlich erforderlich, die Schweißstellen manuell nachzubearbeiten, was einen erhöhten Aufwand und damit ebenfalls erhöhte Kosten nach sich zieht.

Derartige Ultraschall-Bördelverfahren werden nicht nur zur Herstellung von Haartrocknern eingesetzt, sondern auch bei vielen anderen Gegenständen des täglichen Lebens. Dabei ist es nicht erforderlich, daß das Gitter in einer Öffnung angeordnet ist, sondern das Gitter kann auch anderweitig in dem Gehäuse vorgesehen sein. Ebenfalls ist denkbar, daß anstelle des Gitters eine Platte vorhanden ist, die beispielsweise eine Trennwand innerhalb des Gehäuses bildet. Die genannten Nachteile des Ultraschall-Bördelverfahrens sind bei diesen allgemeinen Anwendungen häufig noch in stärkerem Maße vorhanden.

Aus der EP 0 463 315 A2 ist ein Haartrockner bekannt, dessen Ausblasgitter an einem Gehäuse befestigt ist. Zur Befestigung des Ausblasgitters liegt ein ausblasseitiger Randbereich des Gitters an einer Schulter des Gehäuses an. Damit das Gitter nicht in das Gehäuseinnere drückbar ist, liegt am gegenüberliegenden innenseitigen Randbereich des Ausblasgitters ein inneres, zweites Kunststoffgehäuseteil am Ausblasgitter an.

Aus der CH 337426 ist ein Verfahren zur Herstellung von Handfeuerwerkskörpern bekannt, bei dem eine Metallscheibe in einem Rohr befestigt wird, indem die Wandung im Bereich der Scheibe durch eine Induktionsspule erwärmt wird. Die zu erwärmende Wandung weist vor der Erwärmung zur Aufnahme der Scheibe eine wulstförmige Ausbuchtung auf, wobei sich nach der Erwärmung die wulstförmige Ausbuchtung zur Zylinderform zurückbildet.

Aus der US 4,198,557 ist ein Verfahren und ein Haartrockner der eingangs genannten Art bekannt, bei dem ein metallisches Ausblasgitter im Kunststoffgehäuse befestigt ist.

Aufgabe der Erfindung ist es, ein Verfahren zur Befestigung eines Gitters in einem Gehäuse sowie eine Vorrichtung zur Durchführung des Verfahrens zu schaffen, das insbesondere im Hinblick auf den erforderlichen Aufwand und die entstehenden Kosten verbessert ist. Des weiteren ist es Aufgabe der Erfindung, einen Haartrockner mit einem in einem Gehäuse gehaltenen Gitter zu schaffen, der eine hohe Stabilität bei gleichzeitiger hoher Verarbeitunggüte aufweise.

Diese Aufgabe wird bei einem Verfahren der eingangs genannten Art durch die Merkmale des Anspruchs 1 gelöst. Das Gitter wird in das Gehäuse zumindest teilweise anliegend eingefügt, und dann erwärmt.

Durch das Einfügen des Gitters in das Gehäuse liegen die beiden Bauteile zumindest teilweise aneinander an. Nunmehr wird das Gitter erwärmt. Durch das metallische Material des Gitters und die damit verbundenen Wärmeleitfähigkeit wird auch derjenige Teil des Gitters erwärmt, der an dem Gehäuse anliegt. Dies hat zur Folge, daß das mit dem Gitter in Kontakt stehende kunststoffhaltige Material des Gehäuses aufgrund der Wärmeeinwirkung weich wird. Dadurch kann das anliegende Gitter geringfügig in das Gehäuse eindringen. Das durch das eindringende Gitter verdrängte kunststoffhaltige Material des Gehäuses wird neben dem Gitter herausgedrückt und bildet dort mindestens einen kleinen aufgeworfenen Wall. Nunmehr wird die Wärmezufuhr zu dem Gitter beendet und beide Bauteile, also das Gitter und das Gehäuse erkalten. Das Gitter ist damit in dem Gehäuse befestigt.

Das erfindungsgemäße Verfahren hat den Vorteil, daß eine Verbindung zwischen dem Gitter und dem Gehäuse entsteht, die durch eine hohe Stabilität ausgezeichnet ist. Des weiteren ist die Verbindung spannungsfrei und unempfindlich gegen Wärmeschwankungen. Damit ist das Verfahren sehr gut für die Herstellung von Gegenständen des täglichen Lebens, insbesondere für die Herstellung von Haartrocknern geeignet.

Das erfindungsgemäße Verfahren hat den weiteren Vorteil, daß optisch saubere Verbindungsstellen zwischen dem Gitter und dem Gehäuse entstehen und somit keine manuelle Nachbehandlung erforderlich ist. Dies stellt eine wesentliche Verringerung des notwendigen Aufwands und damit der Kosten dar.

Ein weiterer Vorteil des erfindungsgemäßen Verfahrens besteht darin, daß nur wenige Parameter bei der Durchführung des Verfahrens beachtet werden müssen. Im wesentlichen handelt es sich bei diesem Parametern um die Paßgenauigkeit des Gitters in dem Gehäuse sowie um die dem Gitter zugeführte Wärmemenge. Des weiteren ist das Verfahren im wesentlichen unabhängig von der Gestalt des Gitters und des Gehäuses. Dies alles hat zur Folge, daß das Verfahren sehr gut reproduzierbar und damit bestens für die Massenfertigung von verschiedenen Gegenständen geeignet ist.

Bei einer Ausgestaltung des erfindungsgemäßen Verfahrens wird das Gitter unter Spannung in das Gehäuse eingefügt.

Durch die von dem Gitter ausgeübte Spannung dehnt sich das Gehäuse als das nachgiebigere Bauteil geringfügig aus. Gleichzeitig stellt das Gitter aufgrund seines metallischen Materials eine vorgespannte Feder dar. Insgesamt entsteht auf diese Weise ein Preß-Sitz zwischen dem Gitter und dem Gehäuse. Wird nunmehr das Material des Gehäuses durch die Erwärmung des Gitters weich, so kann sich die Vorspannung des Gitters lösen und die Ausdehnung des Gehäuses wieder zurückbilden, indem das Gitter in das aufgeweichte kunststoffhaltige Material des Gehäuses eindringt. Das verdrängte Material wird dann neben dem eingedrungenen Gitter zu einem Wall aufgeworfen.

Die beschriebene Ausgestaltung hat den Vorteil, daß durch den Preß-Sitz das Gitter tiefer in das Gehäuse eindringt. Die Verbindung zwischen dem Gitter und dem Gehäuse wird dadurch stabiler. Die Eindringtiefe ist dabei nur abhängig von der von dem Gitter auf das Gehäuse ausgeübten Spannung. Durch diese Ausgestaltung eignet sich das erfindungsgemäße Verfahren sehr gut für die Herstellung verschiedenster Gegenständen, die völlig unterschiedlichen Belastungen ausgesetzt sein können.

Bei einer anderen Ausgestaltung des erfindungsgemäßen Verfahrens wird das Gitter zur Erwärmung von einem elektromagnetischen Feld beaufschlagt.

Diese Ausgestaltung hat den Vorteil, daß die Erwärmung des Gitters berührungslos erfolgt. Weder das Gitter, noch das Gehäuse müssen somit hinsichtlich der Erwärmung besonders ausgestaltet sein oder vorbereitet werden. Dies senkt den Aufwand und damit die Kosten.

Des weiteren hat die Ausgestaltung den Vorteil, daß das für die Erwärmung erforderliche Werkzeug nicht verschleißt oder auf sonstige Weise abgenutzt wird. Die Betriebs- und Instandhaltungskosten für das Werkzeug sind somit wesentlich geringer.

Ein weiterer Vorteil dieser Ausgestaltung besteht darin, daß die dem Gitter zugeführte Wärmemenge mittels der Frequenz des elektromagnetischen Felds und der an dem Werkzeug angelegten Spannung bzw. dem zugeführten Strom sehr gut eingestellt und reproduziert werden kann. Mit Hilfe der Ausgestaltung eignet sich das erfindungsgemäße Verfahren deshalb besonders gut für die Massenfertigung von Gegenständen.

Des weiteren hat die Ausgestaltung den Vorteil, daß sie für beliebige Ausbildungen des Gitters und des Gehäuses in gleicher Weise eingesetzt werden kann. Die Ausgestaltung ist deshalb für die Herstellung unterschiedlichster Gegenstände bestens geeignet.

Die Aufgabe der Erfindung wird bei einer Vorrichtung der eingangs genannten Art durch die Merkmale des Anspruchs 6 gelöst. Es sind Mittel zum Einfügen des Gitters in das Gehäuse sowie Mittel zum Erwärmen des Gitters vorgesehen.

Bei einer Ausgestaltung der erfindungsgemäßen Vorrichtung ist als Mittel zum Erwärmen des Gitters eine Induktionsspule vorgesehen.

Mit Hilfe der Induktionsspule wird ein elektromagnetisches Feld erzeugt. Wird das aus metallischem Material bestehen Gitter diesem Feld ausgesetzt, so erwärmt es sich aufgrund der sogenannten Induktionswärme.

Die Ausgestaltung hat den Vorteil, daß die dem Gitter zugeführte Wärmemenge durch die an die Induktionsspule angelegte Spannung bzw. den zugeführten Strom sowie durch die Frequenz des erzeugten elektromagnetischen Felds in einfacher Weise eingestellt werden kann. Besonders zweckmäßig ist es des weiteren, die Induktionsspule mit einer hohen Frequenz zu betreiben und gegebenenfalls zu kühlen, beispielsweise mit einer Flüssigkeit.

Die Aufgabe der Erfindung wird bei einem Haartrockner der eingangs genannten Art durch die Merkmale des Anspruchs 6 gelöst. Das Gitter ist in das Gehäuse eingedrungen und das Material des Gehäuses am eingedrungenen Gitter aufgeworfen.

Der erfindungsgemäße Haartrockner hat den Vorteil, daß das Gitter aufgrund des Eindringens in das Gehäuse und aufgrund des aufgeworfenen Materials mit einer hohen Stabilität in dem Gehäuse befestigt ist. Des weiteren ist die Verbindung zwischen dem Gitter und dem Gehäuse aufgrund des kontinuierlichen Erwärmungs- und Abkühlungsvorgangs spannungsfrei und unempfindlich gegen Wärmeschwankungen. Damit ist die Befestigung des Gitters in dem Gehäuse besonders gut für die Verwendung in Haartrocknern geeignet.

Der erfindungsgemäße Haartrockner hat den weiteren Vorteil, daß optisch saubere Verbindungsstellen zwischen dem Gitter und dem Gehäuse vorhanden sind. Insbesondere weist der erfindungsgemäße Haartrockner keine Bördelwulst oder dergleichen auf. Dies wird dabei ohne eine besondere Nachbearbeitung der Verbindungsstellen erreicht, was eine wesentliche Verringerung des notwendigen Aufwands und damit der Kosten darstellt.

Bei einer Ausgestaltung des erfindungsgemäßen Haartrockners ist das Gitter in einer Öffnung des Gehäuses angeordnet.

Die Ausgestaltung hat den Vorteil, daß das Gitter auf einfache Weise in die Öffnung des Gehäuses eingefügt werden kann. Ebenfalls ist es sehr einfach, das in der Öffnung angeordnete Gitter zu erwärmen. Besonders zweckmäßig ist es, wenn es sich bei der Öffnung um die Auslaßöffnung und bei dem Gitter um das Ausblasgitter des Haartrockners handelt.

Bei einer anderen Ausgestaltung des erfindungsgemäßen Haartrockners weist das Gitter einen etwa kreisförmigen durchgehenden Außenrand auf.

Diese Ausgestaltung hat den Vorteil, daß das Gitter an seinem gesamten Umfang an dem Gehäuse anliegt. Dadurch dringt das Gitter auch an seinem gesamten Umfang in das Gehäuse ein. Die Stabilität der Befestigung des Gitters in dem Gehäuse wird auf diese Weise wesentlich erhöht.

Ein weiterer Vorteil der Ausgestaltung besteht darin, daß das etwa kreisförmige Gitter unter Spannung wie eine Tellerfeder wirkt. Dies bedeutet, daß das Gitter an seinem gesamten Umfang in etwa gleicher Weise das Gehäuse nach außen dehnt. Die Erwärmung des Gitters hat dann zur Folge, daß das Gitter auch an seinem gesamten Umfang etwa gleich tief in das Gehäuse eindringt. Auch dies erhöht die Stabilität der Befestigung des Gitters in dem Gehäuse wesentlich.

Bei einer anderen Ausgestaltung des erfindungsgemäßen Haartrockners ist der Außendurchmesser des Außenrands des Gitters geringfügig größer als der Innendurchmesser der Öffnung des Gehäuses.

Diese Ausgestaltung hat den Vorteil, daß auf einfache Weise, nämlich nur durch die genannte Überschneidung der Durchmesser des Gitters und der Öffnung des Gehäuses die beim Einfügen aufzubringende Spannung hervorgerufen wird.

Des weiteren hat die Ausgestaltung den Vorteil, daß durch das Ausmaß der Überschneidung, also durch den Unterschied der Durchmesser des Gitters und der Öffnung des Gehäuses in einfacher Weise die beim Einfügen aufzubringende Spannung relativ genau vorbestimmt werden kann. Auf diese Weise wird durch die Überschneidung die Eindringtiefe des Gitters in das Gehäuse vorbestimmt und damit letztendlich die Stabilität der Befestigung des Gitters in dem Gehäuse.

Als besonders zweckmäßig hat es sich herausgestellt, wenn der Außendurchmessers des Außenrands des Gitters und der Innendurchmesser der Öffnung des Gehäuses sich um einen Wert unterscheiden, der in einem Bereich von etwa 0,1 mm bis etwa 0,5 mm liegt, insbesondere bei einem Wert von etwa 0,3 mm. Bei diesen Werten ergibt sich eine besonders stabile Befestigung des Gitters in dem Gehäuse.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind.

In der Zeichnung zeigt:
- Fig. 1: eine schematische Schnittdarstellung eines Gehäuses eines erfindungsgemäßen Haartrockners,
- Fig. 2: eine schematische Darstellung des Ausschnitts I aus dem Gehäuse der Fig. 1 mit Gitter und
- Fig. 3: eine schematische Darstellung des Ausschnitts I aus dem Gehäuse der Fig. 1 ohne Gitter.

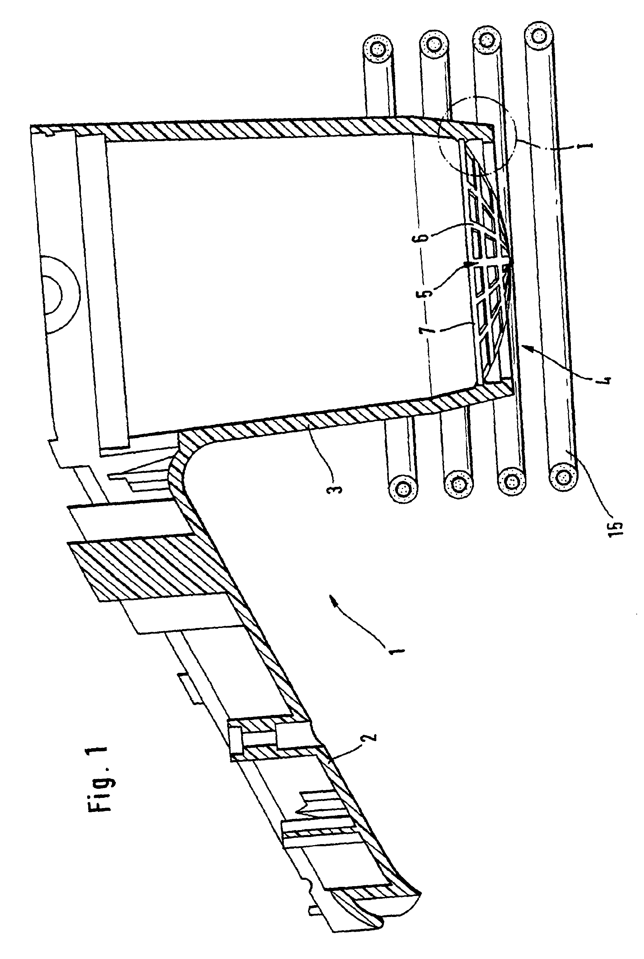

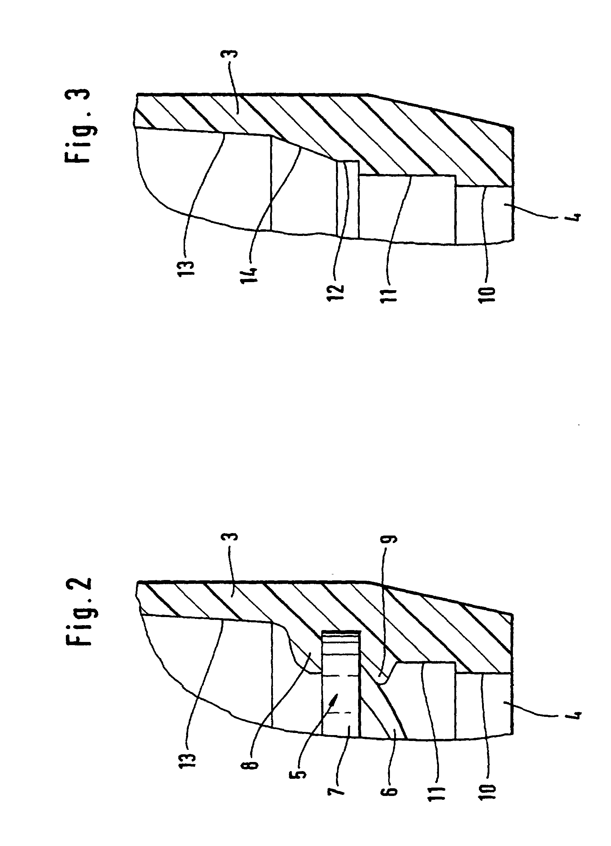

In den Fign. 1 und 2 ist ein Gehäuse 1 eines Haartrockners dargestellt, das ein Griffteil 2 und ein Gebläseteil 3 aufweist. Das Gebläseteil 3 ist etwa rohrförmig ausgestaltet und besitzt an einem Ende eine etwa kreisförmige Öffnung 4 - die Auslaßöffnung des Haartrockners. Im Inneren des Gebläseteils 3 ist ein Elektromotor untergebracht, der ein Gebläse antreibt. Im eingeschalteten Betriebszustand des Haartrockners wird mittels des Gebläses Luft aus der Öffnung 4 ausgeblasen. Des weiteren ist in dem Gebläseteil 3 des Gehäuses 1 eine elektrische Heizung untergebracht, mit der die aus der Öffnung 4 ausgeblasene Luft vorher erwärmt werden kann. Mittels der gegebenenfalls erwärmten Luft kann ein Benutzer seine nassen Haare trocknen.

Das Gehäuse 1 mit dem Griffteil 2 und dem Gebläseteil 3 ist aus kunststoffhaltigem Material hergestellt, der zäh-elastische Eigenschaften besitzt, beispielsweise aus Polycarbonat.

In der Öffnung 4 des Gebläseteils 3 ist ein Gitter 5 - das Ausblasgitter des Haartrockners - befestigt, das etwa quer zur Längsachse des Gebläseteils 3 angeordnet ist. Das Gitter 5 ist etwa kreisförmig ausgebildet, besitzt eine Vielzahl von Stegen 6 und bedeckt die gesamte Öffnung 4. An dem Umfang des Gitters 5 ist ein umlaufender Außenrand 7 vorgesehen. Das Gitter 5 ist etwa halbkugelförmig gewölbt. Mittels des Gitters 5 wird verhindert, daß ein Benutzer in das Innere des Gebläseteils 3 hineingreifen und sich an dem Gebläse oder an der Heizung verletzen kann.

Das Gitter 5 ist aus metallischem Material hergestellt. Insbesondere ist das Gitter 5 aus gehärtetem Stahl hergestellt, der federnde Eigenschaften besitzt, beispielsweise aus CK 55.

Wie insbesondere aus der Fig. 2 ersichtlich ist, ist das Gitter 5 mit seinem Außenrand 7 in das Gebläseteil 3 eingedrungen. Der Außenrand 7 ist vollständig von dem Material des Gebläseteils 3 umgeben. Des weiteren ist das Material des Gebläseteils 3 auf beiden Seiten des Außenrands 7 des Gitters 5 zu jeweils einem Wall 8, 9 aufgeworfen. Die beiden Wälle 8, 9 erstrecken sich auf beiden Seiten des Gitters 5 nach innen. Auf dieses Weise ist das Gitter 5 an seinem gesamten Umfang fest mit dem Gebläseteil 3 verbunden.

In der Fig. 3 ist das Gebläseteil 3 des Haartrockners dargestellt, bevor das Gitter 5 darin befestigt ist. Das Gebläseteil 3 weist im Bereich der Öffnung 4 an seiner Innenseite mehrere Stufen 10, 11, 12, 13 und eine Schräge 14 auf.

Die auf der der Öffnung 4 abgewandten Seite der Schräge 14 angeordnete Stufe 13 des Gebläseteils 3 besitzt einen Innendurchmesser, der zumindest gleich groß oder geringfügig größer ist als der Außendurchmesser des Außenrands 7 des Gitters 5. Die auf der der Öffnung 4 zugewandten Seite der Schräge 14 angeordnete Stufe 12 besitzt jedoch einen Innendurchmesser, der geringfügig kleiner ist als der Außendurchmesser des Außenrands 7 des Gitters 5. Im Bereich der Stufe 12 ist also der Außendurchmesser des Außenrands 7 geringfügig größer als der Innendurchmesser der Öffnung 4 des Gebläseteils 3.

Die Überschneidung des Gebläseteils 3 und des Gitters 5, also die Differenz des Außendurchmessers des Außenrands 7 des Gitters 5 und des Innendurchmessers der Öffnung 4 des Gebläseteils 3 an der Stelle der Stufe 12 weist einen Wert in einem Bereich von etwa 0,1 mm bis etwa D,5 mm auf, insbesondere einen Wert von etwa 0,3 mm.

Bei der Herstellung des Haartrockners wird das Gitter 5 in die Öffnung 4 des Gebläseteils 3 eingefügt. Dazu wird das Gitter 5 in Längsrichtung des Gebläseteils 3 zur Öffnung 4 hin durch das Gebläseteil 3 bewegt.

Im Bereich der Stufe 13 kann das Gitter 5 aufgrund des zumindest gleich großen Außendurchmessers der Stufe 13 ohne weiteres in das Gebläseteil 3 eingefügt werden. Im Bereich der Schräge 14 stößt das Gitter 5 jedoch aufgrund des kleiner werdenden Innendurchmessers des Gebläseteils 3 an diesem an. Das Gitter 5 liegt damit mit seinem Außenrand 7 zumindest teilweise an der Schräge 14 des Gebläseteils 3 an.

Nunmehr wird das Gitter 5 mit Druck in Längsrichtung des Gebläseteils 3 zur Öffnung 4 hin weiterbewegt.

Da das Gitter 5 aus metallischem Material besteht und damit stabiler ist als das Gebläseteil 3 aus kunststoffhaltigem Material, dehnt sich das Gebläseteil 3 im Bereich der Schräge 13 und der nachfolgenden Stufe 12 beim Einpressen des Gitters 5 geringfügig aus. Gleichzeitig wird das Gitter 5 aufgrund seines metallischen Materials und insbesondere aufgrund seiner federnden Eigenschaften geringfügig von dem Gebläseteil 3 zusammengedrückt und bildet dadurch eine vorgespannte Tellerfeder.

Auf diese Weise wird das Gitter 5 so lange mit Druck auf der Schräge 14 weiterbewegt, bis es mit seinem Außenrand 7 auf der Stufe 12 der Öffnung 4 des Gebläseteils 3 angeordnet ist und damit an die Stufe 11 anstößt. Die Stufe 11 bildet eine Begrenzung für die Einschubbewegung des Gitters 5 in das Gebläseteil 3. Das Gitter 5 ist damit unter Spannung in die Öffnung 4 des Gebläseteils 3 eingefügt.

Als Mittel zum Einfügen des Gitters 5 in das Gebläseteil 3 kann beispielsweise ein stempelartiges Schub- oder Preßwerkzeug oder dergleichen vorgesehen sein.

Das Gitter 5 wird nunmehr erwärmt. Wie insbesondere aus der Fig. 1 ersichtlich ist, wird hierzu als Mittel zur Erwärmung eine Induktionsspule 15 verwendet, mit der ein elektromagnetisches Feld erzeugt werden kann. Das Gebläseteil 3 mit dem eingefügten Gitter 5 wird in den Bereich der Induktionsspule 15 eingetaucht und die Induktionsspule 15 wird eingeschaltet. Damit wird das Gitter 5 von dem elektromagnetischen Feld der Induktionsspule 15 beaufschlagt. Dies hat zur Folge, daß sich das metallische Material des Gitters 5 erwärmt. Das Gitter 5 wird dabei aufgrund der sogenannten Induktionswärme insgesamt erwärmt, also auch in seinem Außenrand 7.

Die Erwärmung des Außenrands 7 des Gitters 5 hat zur Folge, daß sich auch das Material des Gebläseteils 3 erwärmt, an dem das Gitter 5 anliegt. Es erwärmt sich somit insbesondere die Stufe 12, ein Teil der Schräge 14 und ein Teil der Stufe 11 des Gebläseteils 3. Aufgrund des kunststoffhaltigen Materials des Gebläseteils 3 erweicht das an dem Gitter 5 anliegende Material des Gebläseteils 3.

Die durch die Überschneidung der Durchmesser des Gitters 5 und der Öffnung 4 entstehende Spannung hat zur Folge, daß das Gitter 5 in das Gebläseteil 3 eindringt. Die Tiefe des Eindringens hängt dabei von der gewählten Überschneidung der Durchmesser des Gitters 5 und der Öffnung 4 des Gebläseteils 3 ab. Aufgrund der kreisförmigen Ausgestaltung des Gitters 5 und der Öffnung 4 beträgt die Tiefe des Eindringens etwa die Hälfte der Überschneidung. Das als vorgespannte Tellerfeder wirkende Gitter 5 entspannt sich bei dem Eindringvorgang und auch das Gebläseteil 3 bildet sich dabei wieder auf seinen ursprünglichen Durchmesser zurück.

Durch das Eindringen des Gitters 5 in das Gebläseteil 3 wird das kunststoffhaltige Material des Gebläseteils 3 verdrängt. Dieses verdrängte Material wird auf beiden Seiten des Außenrands 7 des Gitters 5 herausgedrückt und aufgeworfen. Dadurch bilden sich dort die beiden in der Fig. 2 dargestellten Wälle 8, 9. Die Stufe 12, die Schräge 14 und Teile der Stufe 11 sind jetzt im wesentlichen nicht mehr vorhanden, sondern ihr kunststoffhaltiges Material ist in die aufgeworfenen Wälle 8, 9 übergegangen.

Nunmehr kann das Gebläseteil 3 mit dem Gitter 3 aus dem Bereich der Induktionsspule 15 herausgenommen oder die Induktionsspule 15 abgeschaltet werden. Das erwärmte Material des Gebläseteils 3 erkaltet wieder und geht dadurch wieder in seinen ursprünglichen Zustand über. Das Gitter 5 ist damit in der Öffnung 4 des Gebläseteils 3 befestigt.

Die Dauer und die Intensität der Erwärmung des Gitters 5 und damit der an das Gitter 5 anliegenden Bereiche der Öffnung 4 des Gebläseteils 3 kann mit Hilfe der Induktionsspule 15 eingestellt werden. Insbesondere kann die Frequenz des von der Induktionsspule 15 erzeugten Wechselfelds eingestellt werden. Vorzugsweise wird ein elektromagnetischens Feld mit hoher Frequenz eingestellt. Gegebenenfalls wird die Induktionsspule 15 mit Wasser gekühlt. Des weiteren kann die an der Induktionsspule 15 angelegte Spannung und/oder der der Induktionsspule 15 zugeführte Strom eingestellt werden.

## Patentansprüche

1. Verfahren zur Befestigung eines Gitters (5) in einem Gehäuse (1) eines Haartrockners, wobei das Gitter (5) aus metallischem Material und das Gehäuse (1) aus kunststoffhaltigem Material besteht, **dadurch gekennzeichnet, daß** das Gitter (5) in das Gehäuse (1) zumindest teilweise anliegend eingefügt und dann erwärmt wird, daß das Gitter in das Gehäuse eindringt und das verdrängte, aufgeweichte Material des Gehäuses (1) am eingedrungenen Gitter (5) als erkaltete Wälle (8, 9) aufgeworfen wird.

2. Verfahren nach Patentanspruch 1, **dadurch gekennzeichnet, daß** das Gitter (5) unter Spannung in das Gehäuse (1) eingefügt wird.

3. Verfahren nach Patentanspruch 1 oder 2, **dadurch gekennzeichnet, daß** das Gitter (5) zur Erwärmung von einem elektromagnetischen Feld beaufschlagt wird.

4. Vorrichtung zur Durchführung des Verfahrens nach einem der vorhergehenden Patentansprüche, **dadurch gekennzeichnet, daß** Mittel zum Einfügen des Gitters (5) in das Gehäuse (1) sowie Mittel zum Erwärmen des Gitters (5) vorgesehen sind.

5. Vorrichtung nach Patentanspruch 4, **dadurch gekennzeichnet, daß** als Mittel zum Erwärmen des Gitters (5) eine Induktionsspule (15) vorgesehen ist.

6. Haartrockner mit einem in einem Gehäuse (1) gehaltenen Gitter (5), **dadurch gekennzeichnet, daß** das Gitter (5) in das Gehäuse (1) eingedrungen und das verdrängte, aufgeweichte Material des Gehäuses (1) am eingedrungenen Gitter (5) als erkaltete Wälle (8, 9) aufgeworfen ist.

7. Haartrockner nach Patentanspruch 6, **dadurch gekennzeichnet, daß** das Gitter (5) in einer Öffnung (4) des Gehäuses (1) angeordnet ist.

8. Haartrockner nach Patentanspruch 6 oder 7, **dadurch gekennzeichnet, daß** das Gitter (5) einen etwa kreisförmigen durchgehenden Außenrand (7) aufweist.

9. Haartrockner nach Patentanspruch 7 und 8, **dadurch gekennzeichnet, daß** der Außendurchmesser des Außenrands (7) des Gitters (5) geringfügig größer ist als der Innendurchmesser der Öffnung (4) des Gehäuses (1).

10. Haartrockner nach Patentanspruch 9, **dadurch gekennzeichnet, daß** es sich bei der Öffnung (4) um die Auslaßöffnung und bei dem Gitter (5) um das Ausblasgitter handelt.

11. Haartrockner nach Patentanspruch 9 oder 10, **dadurch gekennzeichnet, daß** der Außendurchmessers des Außenrands (7) des Gitters (5) und der Innendurchmesser der Öffnung (4) des Gehäuses (1) sich um einen Wert unterscheiden, der in einem Bereich von etwa 0,1 mm bis etwa 0,5 mm liegt, insbesondere bei einem Wert von etwa 0,3 mm.

## Claims

1. A method for fixing a screen (5) in a housing (1) of a hair dryer, wherein the screen (5) consists of a metallic material and the housing (1) consists of a material containing plastic, **characterized by** the fact that the screen (5) is inserted into the housing such that it at least partially adjoins the housing (1) and subsequently heated, and by the fact that the screen penetrates into the housing and the displaced softened material of the housing (1) is pressed upward on the penetrated screen (5) in the form of cooled ridges (8, 9).

2. The method according to Claim 1, **characterized by** the fact that the screen (5) is inserted into the housing (1) under tension.

3. The method according to Claim 1 or 2, **characterized by** the fact that the screen (5) is subjected to an electromagnetic field in order to be heated.

4. A device for carrying out the method according to one of the preceding claims, **characterized by** the fact that means for inserting the screen (5) into the housing (1) and means for heating the screen (5) are provided.

5. The device according to Claim 4, **characterized by** the fact that the means for heating the screen (5) consists of an induction coil (15).

6. A hair dryer with the screen (5) that is held in a housing (1), **characterized by** the fact that the screen (5) penetrates into the housing (1), and by the fact that the displaced softened material of the housing (1) is pressed upward on the penetrated screen (5) in the form of cooled ridges (8, 9).

7. The hair dryer according to Claim 6, **characterized by** the fact that the screen (5) is arranged in an opening (4) of the housing (1).

8. The hair dryer according to Claim 6 or 7, **characterized by** the fact that the screen (5) has an approximately circular, continuous outer edge (7).

9. The hair dryer according to Claims 7 and 8, **characterized by** the fact that the outside diameter of the outer edge (7) of the screen (5) is slightly larger than the inside diameter of the opening (4) in the housing (1).

10. The hair dryer according to Claim 9, **characterized by** the fact that the opening (4) consists of the outlet opening, and by the fact that the screen (5) forms the blow-out screen.

11. The hair dryer according to Claim 9 or 10, **characterized by** the fact that the outside diameter of the outer edge (7) of the screen (5) and the inside diameter of the opening (4) in the housing (1) differ by a value that lies between approximately 0.1 mm and approximately 0.5 mm, in particular, a value of approximately 0.3 mm.

## Revendications

1. Procédé pour la fixation d'une grille (5) dans un boîtier (1) d'un sèche-cheveux, dans lequel la grille (5) est constituée d'une matière métallique et le boîtier (1) d'une matière contenant de la matière synthétique,
***caractérisé en ce que*** la grille (5) est enchâssée, au moins de manière partiellement en appui, dans le boîtier (1) et est alors chauffée, **en ce que** la grille pénètre dans le boîtier et la matière, du boîtier (1), ramollie et repoussée est soulevée sous la forme de remparts (8, 9) refroidis contre la grille (5) qui a pénétré.

2. Procédé suivant la revendication 1, **caractérisé en ce que** la grille (5) est enchâssée sous tension dans le boîtier (1).

3. Procédé suivant la revendication 1 ou 2, **caractérisé en ce que** la grille (5) est sollicitée par un champ électromagnétique pour le chauffage.

4. Dispositif pour la mise en oeuvre du procédé suivant l'une des revendications précédentes, **caractérisé en ce que** sont prévus des moyens pour l'enchâssement de la grille (5) dans le boîtier (1) ainsi que des moyens pour le chauffage de la grille (5).

5. Dispositif suivant la revendication 4, **caractérisé en ce qu'**une bobine d'induction (15) est prévue comme moyen pour le chauffage de la grille (5).

6. Sèche-cheveux comportant une grille (5) tenue dans un boîtier (1), **caractérisé en ce que** la grille (5) a pénétré dans le boîtier (1) et **en ce que** la matière, du boîtier (1), ramollie et refoulée est soulevée, sous la forme de remparts (8, 9) refroidis, contre la grille (5) qui a pénétré.

7. Sèche-cheveux suivant la revendication 6, **caractérisé en ce que** la grille (5) est agencée dans une ouverture (4) du boîtier (1).

8. Sèche-cheveux suivant la revendication 6 ou 7, **caractérisé en ce que** la grille (5) présente un bord exteme (7) continu et approximativement en forme de cercle.

9. Sèche-cheveux suivant la revendication 7 ou 8, **caractérisé en ce que** le diamètre externe du bord externe (7) de la grille (5) est quelque peu plus grand que le diamètre interne de l'ouverture (4) du boîtier (1).

10. Sèche-cheveux suivant la revendication 9, **caractérisé en ce qu'**il s'agit, dans le cas de l'ouverture (4), de l'ouverture de sortie et, dans le cas de la grille (5), de la grille de soufflage.

11. Sèche-cheveux suivant la revendication 9 ou 10, **caractérisé en ce que** le diamètre externe du bord externe (7) de la grille (5) et le diamètre interne de l'ouverture (4) du boîtier (1) diffèrent d'une valeur qui se situe dans une zone d'approximativement 0,1 mm à approximativement 0,5 mm, en particulier d'une valeur d'approximativement 0,3 mm.
